**Europäisches Patentamt**

(19) **European Patent Office**

**Office européen des brevets**

(11) Numéro de publication: **0 012 690**
**B1**

(12) **FASCICULE DE BREVET EUROPEEN**

(45) Date de publication du fascicule du brevet: **31.07.85**

(21) Numéro de dépôt: **79401001.7**

(22) Date de dépôt: **11.12.79**

(51) Int. Cl.⁴: **F 42 B 5/18, C 08 J 9/32**

(54) Objets combustibles et notamment douilles combustibles résistant à la chaleur.

(30) Priorité: **15.12.78 FR 7835345**
**19.09.79 FR 7923367**

(43) Date de publication de la demande:
**25.06.80 Bulletin 80/13**

(45) Mention de la délivrance du brevet:
**31.07.85 Bulletin 85/31**

(84) Etats contractants désignés:
**BE CH DE GB IT LU NL SE**

(56) Documents cités:
**DE-A-1 578 082**
**DE-A-2 246 588**
**FR-A-2 017 366**
**FR-A-2 161 435**
**FR-A-2 267 203**
**FR-A-2 290 825**
**FR-A-2 294 421**
**GB-A-1 239 771**
**US-A-3 219 600**
**US-A-3 585 157**
**US-A-3 636 881**

(73) Titulaire: **SOCIETE NATIONALE DES POUDRES
ET EXPLOSIFS
12, quai Henri IV
F-75181 Paris Cedex 04 (FR)**

(72) Inventeur: **Lippler, Rémy
8, impasse André Lévêque
F-24100 Bergerac (FR)**
Inventeur: **Mengelle, André
3, allée des Grands Ducs
F-24100 Bergerac (FR)**
Inventeur: **Plazanet, Jacques
Saint Sauveur de Bergerac
F-24520 Mouleydier (FR)**

(56) References cited:
**US-A-3 877 374**
**US-A-3 895 979**
**US-A-3 987 731**
**US-A-4 034 676**

Courier Press, Leamington Spa, England.

EP 0012690 B1

## Description

L'invention se rapporte au domaine des objets combustibles utilisés en armement et notamment à celui des douilles combustibles. L'invention concerne plus précisément les objets combustibles et notamment les douilles combustibles résistant à la chaleur et présentant un retard à l'inflammation lorsqu'on les met au contact d'une paroi chaude. Les objets combustibles selon l'invention sont recouverts d'un vernis à liant organique contenant des microbilles creuses.

Il est de plus en plus fréquent, dans le domaine de l'armement, de remplacer dans les munitions des éléments constitutifs qui étaient jusqu'à une époque récente réalisés en matériau solide incombustible et notamment en métal, par des éléments combustibles qui se décomposent en brûlant lors de la mise à feu de la munition et qui présentent ainsi le double avantage d'offrir un supplément d'énergie tout en évitant au tireur l'obligation, après la mise à feu, d'éjecter des parties solides qui n'ont pas participé à la mise à feu et à l'éjection du projectile de la munition. Parmi les objets combustibles actuellement utilisés en armement, les plus connus sont les douilles combustibles; on connaît également des munitions sans étui, des tubes porte-amorce combustibles, des ailettes de roquette combustibles, etc... Des douilles combustibles réalisées à partir d'un mélange de fibres de cellulose et de nitrocellulose sont par exemple décrites dans le brevet français 2 234 113 au nom de la demanderesse.

Un problème important qui se pose dans le cas de l'utilisation d'objets combustibles dans les armes automatiques à grande cadence de tir est celui de l'auto-inflammation desdits objets combustibles et notamment des douilles combustibles. En effet dans de telles armes, il se produit un échauffement important des parois internes de l'arme qui peuvent atteindre des températures élevées souvent supérieures à la température d'auto-inflammation des produits organiques qui se situe en général autour de 250°C. A cette température les objets combustibles usuels risquent de s'enflammer spontanément lors de leur introduction dans l'arme et de provoquer une mise à feu non souhaitée de la munition. Pour résoudre ce problème de l'auto-inflammation on a proposé des objets combustibles réalisés en mousse de polymère comme de la mousse polyuréthanne par exemple. Les pores de la mousse contiennent de l'air qui joue alors le rôle d'isolant thermique. Cette solution semble à priori satisfaisante mais présente l'inconvénient majeur suivant: les mousses de polymère présentent toujours une épaisseur non négligeable et de ce fait brûlent mal, pour avoir une vitesse de combustion suffisante il est nécessaire d'incorporer à ladite mousse des explosifs, ce qui n'est pas sans danger et ce qui ne convient pas pour toutes les applications des objets combustibles. Des douilles combustibles réalisés selon cette technique sont par exemple décrites dans le brevet français 2 103 794. Une autre solution au problème de l'auto-inflammation consiste à envelopper les parties de l'objet combustible susceptibles d'entrer en contact avec une paroi chaude, avec un revêtement isolant qui peut être par exemple une mousse de polyuréthanne. Une telle solution est par exemple décrite dans le brevet français 2 294 421. Mis à part le fait qu'il s'agit là d'une technique relativement compliquée de mise en oeuvre et donc onéreuse, on retrouve par ailleurs les inconvénients précédemment mentionnés.

Une autre solution consiste à revêtir les douilles ou munitions combustibles par une ou de préférence plusieurs couches d'un vernis renfermant des microcapsules contenant un liquide vaporisable, la protection thermique étant assurée pour l'essentiel par ce liquide vaporisable. Une telle solution, décrite par exemple dans le brevet US 3 877 374, présente l'inconvénient de nécessiter, dans sa réalisation préférentielle, plusieurs couches de vernis renfermant les dites microcapsules ce qui revient à conférer une épaisseur non négligeable à la couche protectrice.

Par ailleurs la solution décrite dans le brevet US 3 877 374 nécessite le recours à des microcapsules renfermant un liquide vaporisable, de confection délicate et donc coûteuses.

Le brevet français 2 340 289 décrit quant à lui un matériau calorifuge isolant constitué par un liant durcissable, initialement liquide, et par des billes creuses contenant un gaz. Les billes creuses contenant un gaz sont d'une obtention beaucoup plus aisée que les microcapsules contenant un liquide vaporisable et sont ainsi beaucoup moins coûteuses. Mais le brevet français 2 340 289 n'enseigne essentiellement l'utilisation d'un tel matériau que d'une manière générale et ne comporte aucun enseignement spécifique relatif à l'utilisation d'un tel matériau en vue de l'isolation thermique d'objets combustibles.

L'homme de métier ne dispose donc pas d'une solution simple, permettant une bonne isolation thermique des objets combustibles et ne nécessitant pas un volume important au détriment dudit objet combustible. La protection efficace des objets combustibles contre l'auto-inflammation est encore compliquée par le fait que la solution adoptée ne doit pas laisser de traces d'imbrûlés dans l'arme après le tir, même pour des tirs effectués à basse pression.

La présente invention a pour objet de proposer des objets combustibles, et notamment des douilles combustibles, qui résistent à le chaleur et pour lesquels l'auto-inflammation au contact d'une paroi chaude est retardée et qui ne présentent pas les inconvénients précédemment mentionnés.

L'invention concerne donc des objets combustibles résistant à la chaleur, et notamment des douilles combustibles, recouverts par une couche mince de vernis à liant organique choisi dans le groupe constitué par les caoutchoucs chlorés, le chlorure de polyvinylidène, les liants cellulosiques, les liants glycérophtaliques, les résines polyuréthannes, les résines polyépoxy, et contenant entre 5 et 20% en poids, par rapport au poids de polymère constituant la base du vernis, de microbilles creuses contenant un gaz, caractérisé en ce que ledit vernis contient entre 2 et 15% en poids par rapport au poids de polymère constituant la base dudit vernis, d'une charge énergétique ayant un point d'auto-inflammation supérieur à 200°C et choisie dans le groupe constitué par les polymères ou les copolymères nitrés, la nitroguanidine et les explosifs nitrés non hydrophiles.

D'une manière générale, la charge énergétique doit avoir un point d'auto-inflammation supérieur à 200°C; on entend par point d'auto-inflammation la température de décomposition du produit lorsqu'il est soumis à une augmentation régulière de la température de 5°C par minute.

On peut utiliser comme charge énergétique des polymères ou des copolymères nitrés comme par exemple le dinitropolystyrène, des composés nitrés énergétiques comme la nitroguanidine ou même des composés nitrés explosifs qui ne sont pas hydrophiles; on utilisera de préférence dans ce dernier cas des composés nitrés organiques comme, par exemple, l'hexogène ou l'octogène. Pour des raisons de sécurité, au moment de la confection du vernis, on préféra l'emploi des composés nitrés ou des polymères nitrés non explosifs. La teneur en charge énergétique dans la solution de vernis est comprise entre 2 et 15% en poids par rapport au poids de polymère constituant la base du vernis, et préférentiellement entre 3 et 10% en poids.

On donne ci-après une description détaillée de la mise en oeuvre de l'invention.

Les objets combustibles, et notamment les douilles combustibles, selon l'invention sont recouverts par une couche mince de vernis contenant des microbilles creuses. Ledit vernis est constitué, à l'état liquide, par une solution de polymère dans un solvant, ladite solution contenant entre 5 et 20% en poids, par rapport au polymère dissout, de microbilles creuses. Comme base du vernis on peut utiliser un caoutchouc chloré, du chlorure de polyvinylidène, un liant cellulosique, un liant glycéro-phtalique ou une résine polyuréthanne ou polyépoxy. Selon une variante préférée de l'invention on utilise comme base du vernis une résine polyuréthanne. Le solvant utilisé sera un solvant volatil du polymère choisi. Si l'on utilise un caoutchouc chloré, du chlorure de polyvinylidène, un liant glycérophtalique, ou une résine polyuréthanne on choisira de préférence un hydrocarbure comme le trichloréthylène ou le toluène; si l'on utilise une résine polyuréthanne, une résine polyépoxy, ou un liant cellulosique on choisira de préférence une cétone comme par exemple la méthyl, éthyl cétone ou la méthyl, isobutyl cétone; si l'on utilise une résine polyuréthanne on peut également employer comme solvant un ester volatil comme l'acétate de butyle ou l'acétate d'éthylglycol. La solution de vernis contient par ailleurs entre 5 et 20% en poids, par rapport au poids de polymère constituant la base du vernis, de microbilles creuses, et préférentiellement environ 10% en poids de microbilles creuses. Dans le cadre de la présente invention il faut entendre par "microbilles creuses" des microbilles contenant un gaz, l'air ou un gaz inerte selon le type de microbilles, à l'exclusion de tout autre composé liquide ou solide. On peut utiliser les différentes microbilles creuses qui existent comme par exemple les microbilles en verre nu, en verre argenté, en résine phénolique, en chlorure de polyvinylidène, etc... On évitera cependant d'utiliser des microbilles qui soient attaquées par le solvant du vernis, ainsi, dans le cas où le vernis liquide est constitué par une solution de caoutchouc chloré on évitera d'utiliser des microbilles en chlorure de polyvinylidène, mais on utilisera plutôt des microbilles en verre. La granulométrie des microbilles utilisées sera de préférence comprise entre 30 et 150 microns. Le choix des microbilles utilisées se fera également en tenant compte des problèmes particuliers liés à l'emploi final de l'objet combustible, tels que, par exemple, l'érosion du tube de l'arme, etc...

La solution de vernis contient de manière caractéristique, entre 2 et 15% en poids de charges énergétiques, les pourcentages étant exprimés par rapport au poids de polymère constituant le vernis. On utilisera comme charges énergétiques les charges énumérées plus haut en choisissant de préférence des charges qui ne soient que peu on pas du tout solubles dans le solvant utilisé pour la confection du vernis.

Le vernis liquide est alors appliqué, par trempage ou au pistolet, sur les surfaces de l'objet combustible susceptible d'être mises au contact d'une paroi chaude. La quantité de vernis liquide déposée est en général comprise entre 50 et 200 g/m2 selon l'application envisagée pour l'objet combustible et selon la nature exacte de la composition du vernis liquide, l'homme de métier déterminant lui-même la quantité de vernis qu'il souhaite déposer.

Les vernis liquides selon l'invention peuvent être appliqués sur les différents matériaux constitutifs des objets combustibles usuels, et notamment sur les mélanges fibres de cellulose/fibres de nitrocellulose décrits dans le brevet français 2 234 113. Après application du vernis liquide il suffit de laisser s'évaporer le solvant pour obtenir un matériau combustible qui présente un retard à l'auto-inflammation s'il est mis au contact d'une paroi chaude et dont les propriétés thermodynamiques ne sont pas altérées.

L'invention sera mieux comprise à l'aide des exemples de mise en oeuvre donnés ci-après à titre non limitatif.

Exemple 1

On prépare 8 éprouvettes d'essai parallélépipédiques de dimensions 10×10×103,5 mm. Ces éprouvettes sont composées selon la technique du brevet français 2 234 113 par un mélange de fibres de cellulose et de fibres de nitrocellulose et répondent à la composition précise suivante:

| nitrocellulose (taux d'azote 13,35%) | 63 parties en poids |
|---|---|
| kraft | 27 parties en poids |
| résine acrylique thermodurcissable | 9 parties en poids |
| diphénylamine | 1 partie en poids |

On prépare par ailleurs un vernis liquide de formulation suivante:

| microbilles phénoliques | 10 parties en poids |
|---|---|
| Desmophen 1200 | 30 parties en poids |
| Desmophen RD 18 | 37,5 parties en poids |
| Desmodur HL | 50 parties en poids |
| méthyl, isobutyl cétone | 25 parties en poids |

Les microbilles phénoliques ont une granulométrie comprise entre 40 et 150 microns.

Le Desmophen 1200 est un polyester triol ramifié ayant un taux de groupes hydroxyle OH de 2,94 équivalents par kg, commercialisé par la firme Farbenfabriken Bayer AG.

Le Desmophen RD 18 est un polyester ramifié modifié avec des acides gras et ayant un taux de groupes hydroxyle OH de 3 équivalents par kg, ce produit est commercialisé par la firme Farbenfabriken Bayer AG.

Le Desmodur HL est un isocyanurate mixte dérivé du toluène diisocyanate et de l'hexaméthylène diisocyanate, présentant un taux de groupes NCO de 2,5 équivalents par kg et commercialisé par la firme Farbenfabriken Bayer AG.

Quatre éprouvettes sont enduites du vernis ainsi préparé à raison de 64 g/m2 de vernis liquide, les quatre autres éprouvettes ne sont pas traitées.

Après séchage du vernis les éprouvettes traitées et non traitées sont testées sur plaque chauffante à différentes températures. Les éprouvettes, soumises à leur propre poids sont placées à pression ordinaire au contact de la plaque chauffante, face enduite contre le métal pour les éprouvettes traitées, à la température de l'essai. On mesure le délai d'auto-inflammation de chaque éprouvette. Les résultats sont les suivants:

| état de surface | température | | | |
|---|---|---|---|---|
| | 220°C | 240°C | 260°C | 280°C |
| éprouvette nue | 80 s | 21 s | 10 s | 3 s |
| éprouvette enduite | 102 s | 48 s | 22 s | 16 s |

Il apparaît nettement au vu de ces résultats que la protection par enduction permet d'augmenter notablement les délais d'auto-inflammation entre 200 et 300°C.

On a renouvelé les essais avec des éprouvettes enduites à raison de 185 g/m2 de vernis liquide. Les délais d'autoinflammation sont multipliés par trois.

Exemple 2

On renouvelle l'exemple 1 en remplaçant les microbilles phénoliques par des microbilles en chlorure de polyvinylidène, les éprouvettes étant enduites à raison de 69,4 g/m2 de vernis liquide.

Le délai d'auto-inflammation de l'éprouvette enduite à 280°C est de 10 s.

Exemple 3

Cet exemple concerne la préparation d'un vernis contenant une charge énergétique.

On prépare 8 éprouvettes d'essai parallélépipédiques de dimensions 10×10×3,5 mm. Ces éprouvettes sont composées selon la technique du brevet français 2 234 113 par un mélange de fibres de cellulose et de fibres de nitrocellulose et répondent à la composition précise suivante:

| nitrocellulose (taux d'azote 13,35%) | 63 parties en poids |
|---|---|
| kraft | 27 parties en poids |
| résine acrylique thermodurcissable | 9 parties en poids |
| diphénylamine | 1 partie en poids |

# 0 012 690

On prépare par ailleurs un vernis liquide de formulation suivante:

| | |
|---|---|
| microbilles phénoliques | 10 parties en poids |
| Desmophen 1200 | 30 parties en poids |
| Alkydal F 251 | 37,5 parties en poids |
| Desmodur HL | 50 parties en poids |
| Dinitro polystyrène | 5,2 parties en poids |
| Méthyl isobutyl cétone | 25 parties en poids |

Les microbilles phénoliques ont une granulométrie moyenne de 40 microns et sont commercialisées par la firme Hexcel-France sous la marque Rezolin.

Le Desmophen 1200 est un polyester triol ramifié ayant un taux de groupes hydroxyle OH de 2,94 équivalents par kg, commercialisé par la firme Farbenfabriken Bayer AG.

L'alkydal F 251 est une résine glycérophtalique comportant des groupes hydroxyle, ce produit est commercialisé par la firme Farbenfabriken Bayer AG.

Le Desmodur HL est un isocyanurate mixte dérivé du toluène diisocyanate et de l'hexaméthylène diisocyanate, présentant un taux de groupes NCO de 2,5 équivalents par kg et commercialisé par la firme Farbenfabriken Bayer AG.

Quatre éprouvettes sont enduites du vernis ainsi préparé à raison de 65 g/m2 de vernis liquide, les quatre autres éprouvettes ne sont pas traitées.

Après séchage du vernis, le éprouvettes traitées et non traitées sont testées sur plaque chauffante à différentes températures. Les éprouvettes, soumises à leur propre poids sont placées à pression ordinaire au contact de la plaque chauffante, face enduite contre le métal pour les éprouvettes traitées, à la température de l'essai. On mesure le délai d'auto-inflammation de chaque éprouvette. Les résultats sont les suivants:

| | température | | | |
|---|---|---|---|---|
| état de surface | 220°C | 240°C | 260°C | 280°C |
| éprouvette nue | 80 s | 21 s | 10 s | 3 s |
| éprouvette enduite | 105 s | 31,4 s | 12 s | 4 s |

Exemple 4

On renouvelle l'exemple 3 en utilisant comme charge énergétique de la nitroguanidine.

On prépare un vernis liquide de formulation suivante:

| | |
|---|---|
| microbilles phénoliques | 10 parties en poids |
| Desmophen 1200 | 30 parties en poids |
| Alkydal F 251 | 37,5 parties en poids |
| Desmodur HL | 50 parties en poids |
| Nitroguanidine | 3,9 parties en poids |
| Méthyl isobutyl cétone | 25 parties en poids |

On procède comme dans l'exemple 1, le taux d'enduction des éprouvettes étant de 65 g/m2 de vernis liquide. Les résultats sont les suivants:

| | température | | | |
|---|---|---|---|---|
| état de surface | 220°C | 240°C | 260°C | 280°C |
| éprouvette nue | 80 s | 21 s | 10 s | 3 s |
| éprouvette enduite | 102 s | 33 s | 22 s | 8 s |

5

Exemple 5

On renouvelle l'exemple 1 en utilisant comme charge énergétique un mélange d'hexogène et de dinitropolystyrène.

On prépare un vernis liquide de formulation suivant:

| | |
|---|---|
| microbilles phénoliques | 10 parties en poids |
| Desmophen 1200 | 30 parties en poids |
| Alkydal F 251 | 37,5 parties en poids |
| Desmodur HL | 50 parties en poids |
| Hexogène | 15,75 parties en poids |
| Dinitropolystyrène | 4,9 parties en poids |
| Méthyl isobutyl cétone | 25 parties en poids |

On procéde comme dans l'exemple 1, le taux d'enduction des éprouvettes étant de 65 g/m2 de vernis liquide. Les résultats sont les suivants:

| état de surface | température | | | |
|---|---|---|---|---|
| | 220°C | 240°C | 260°C | 280°C |
| éprouvette nue | 80 s | 21 s | 10 s | 3 s |
| éprouvette enduite | 104 s | 32,4 s | 17 s | 6 s |

Il apparaît nettement au vu de ces résultats que la protection par enduction permet d'augmenter sensiblement les délais d'auto-inflammation entre 200 et 300°C.

Par ailleurs, à l'occasion des essais relatifs aux exemples 3, 4 et 5, il a été constaté qu'il ne subsiste pratiquement pas de résidu de l'enduit et que les microbilles sont entièrement détruites.

## Revendications

1. Objet combustible résistant à la chaleur, et notamment douille combustible, recouvert par une couche mince de vernis à liant organique choisi dans le groupe constitué par les caoutchoucs chlorés le chlorure de polyvinylidène, les liants cellulosiques, les liants glycérophtaliques, les résines polyuréthannes, les résines polyépoxy, et contenant entre 5 et 20% en poids, par rapport au poids de polymère constituant la base du vernis, de microbilles creuses contenant un gaz, caractérisé en ce que ledit vernis contient entre 2 et 15% en poids par rapport au poids de polymère constituant la base dudit vernis, d'une charge énergétique ayant un point d'auto-inflammation supérieur à 200°C et choisie dans le groupe constitué par les polymères ou les copolymères nitrés, la nitroguanidine et les explosifs nitrés non hydrophiles.

2. Objet combustible, selon la revendication 1, caractérisé en ce que le polymère nitré est le dinitro polystyrène.

3. Objet combustible, selon la revendication 1, caractérisé en ce que ladite charge énergétique est choisie dans le groupe constitué par les explosifs nitrés organiques non hydrophiles.

4. Objet combustible, selon la revendication 3, caractérisé en ce que ladite charge énergétique est l'hexogène ou l'octogène.

## Patentansprüche

1. Brennbares hitzebeständiges Objekt, insbesondere brennbare Hülse, die mit einer dünnen Schicht aus Lack mit einem organischen Bindemittel bedeckt ist, das aus der Gruppe, bestehend aus den Chlorkautschuken, Polyvinyliden chlorid, Zellulose-Bindemittel, Bindemittel auf der Basis von Glycerophtalaten, Polyurethanharzen und Polyepoxyharzen gewählt ist und zu zwischen 5 und 20 Gew.-%, bezogen auf den den Grundstoff des Lacks bildenden Polymer, hohle gasgefüllte Mikrokugeln enthält, dadurch gekennzeichnet, daß der Lack zu zwischen 2 und 15 Gew.-%, bezogen auf den, den Grundstoff des Lacks bildenden Polymer, einen Energie freisetzenden Füllstoff mit einer Selbstentflammtemperatur von mehr als 200°C enthält, der aus der Gruppe, bestehend aus nitrierten Copolymeren oder nitrierten Polymeren, Nitroguanidin und den nitrierten nicht-hydrophilen Sprengstoffen gewählt ist.

2. Brennbares Objekt nach Anspruch 1, dadurch gekennzeichnet, daß das nitrierte Polymer Dinitropolystyrol ist.

6

3. Brennbares Objekt nach Anspruch 1, dadurch gekennzeichnet, daß der Energie freisetzende Füllstoff aus der Gruppe der nitrierten organischen nicht-hydrophilen Sprengstoffe gewählt ist.

4. Brennbares Objekt nach Anspruch 3, dadurch gekennzeichnet, daß der Energie freisetzende Füllstoff Hexogen oder Oktogen ist.

**Claims**

1. A heat resistant combustible object, and particularly a combustible cartridge case, covered with a thin layer of varnish of an organic binder selected from the group consisting of chlorinated rubbers, polyvinyliden chloride cellulosic binders, glycerophthalic binders, polyurethane resins, polyepoxy resins, and containing between 5 and 20% by weight, relative to the weight of polymer constituting the varnish base, of gas-containing hollow microspheres, characterised in that the varnish contains between 2 and 15% by weight, relative to the weight of polymer constituting the varnish base, of an energetic charge having an autoinflammation point greater than 200°C and selected from the group consisting of nitro polymers or copolymers, nitroguanidine and non-hydrophilic nitro explosives.

2. Combustible object, according to Claim 1, characterised in that the nitro polymer is dinitro polystyrene.

3. Combustible object, according to Claim 1, characterised in that the energetic charge is selected from the group consisting of non-hydrophilic, organic nitro explosives.

4. Combustible object, according to Claim 3, characterised in that the energetic charge is hexogen or octogen.